# EUROPEAN PATENT APPLICATION

(11) **EP 2 117 168 A1**
(43) Date of publication of application: **11.11.2009**
(21) Application number: 08103854.9
(22) Date of filing: 07.05.2008
(51) Int. Cl.: H04L 12/24, H04Q 3/00

(54) **Method and device for modifying a path and/or a service of a network element in a TMN system and communication system comprising such device**

(71) Applicant: Nokia Siemens Networks Oy, 02610 Espoo (FI)
(72) Inventor: Frantz, Michael, 81737 München (DE); Günther, Wolfgang, 81479 München (DE)
(74) Representative: Bruglachner, Thomas E.

(57) **Abstract**

A method and a device are provided for modifying a path and/or a service of at least one first network element in a TMN system is provided comprising the steps of (i) identify the path through and/or the service of the first network element; and (ii) map the path and/or the service identified to at least one second network element. Further, a communication system comprising such a device is suggested.

## Description

The invention relates to a method and to a device for modifying a path and/or a service of a network element in a TMN system and to a communication system comprising such a device.

Transport networks comprise different technologies like DWDM, SDH or Ethernet. In such multi-technology networks services can be provisioned by a Telecommunications Management Network (TMN) system end-to-end spanning one or several technologies. For routing and configuration purposes regarding in particular new services to be provided by the network, the TMN system needs to be aware of the topology of the transport network. Paths throughout the network utilizing new services can be routed automatically or manually.

Within such transport networks a network element (NE) used for traffic transmission may have to be replaced by a new type of network element that provides extended capacity and/or functionality. The NEs are managed - supervised and/or configured - via the (central) TMN system. Such TMN system stores in its database services and service-related paths of the managed network domain as well as information regarding the resources supporting a particular service, e.g., NEs, ports, termination points (TPs), etc.

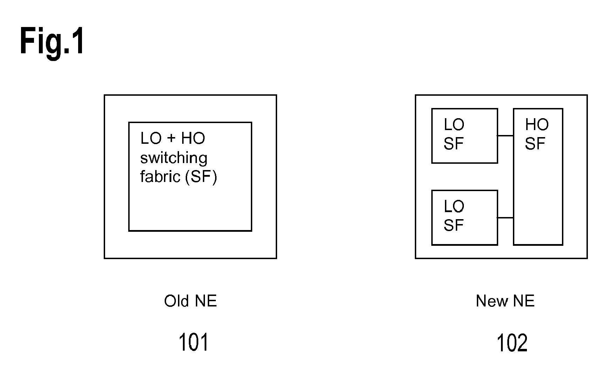

When the NE is upgraded, all services using this NE may have to be reconfigured. Such scenario inflicts several problems:
a. There may not be enough resources to be able to reroute the affected services of the network element to be upgraded (or in particular replaced). This may affect an installation of further network elements and/or cards as well as additional fibers thereby increasing significant costs regarding CAPEX as well as OPEX.
b. Services need to be rerouted to ensure acceptable downtimes per service. This results in a time consuming process causing significant OPEX.
c. Several old NEs may be replaced by one new NE which may result in a different network topology. In addition, the architecture of the new NE itself can be different compared to the old NE(s). Hence, it may not be possible, to simply reconfigure the same parameters in the new NE.
   An example is shown in **Fig.1****.** An old NE 101 comprises one cross connection (CC) matrix only, which supports lower order (LO) as well as higher order (HO) cross connections. This old NE 101 is replaced by a new NE 102 supporting two separate CC-matrices for LO and one CC-matrix for HO, wherein the LO CC-matrices are connected to the HO CC-matrix.
   Hence, the CC switched in the old NE 101 cannot simply be duplicated and transferred to the new NE 102.
d. The object hierarchy may be different in a NE to be replaced, e.g., shelf, rack and card hierarchy.
   This may become a problem regarding the identification of objects in the TMN system, since this structure is used to form a unique identifier for all objects to be configured by the TMN system. Therefore, the identification of objects which were contained in the old NE may not be suitable for the corresponding objects of the new NE.
e. Card types may be different. New card types with different amounts of objects (e.g., ports) and different functionality may be used with the new NE. Hence, the physical connectivity cannot be simply mapped due to the changed equipment structure and due to the additional functionality provided by the new NE.
   For example, it may be necessary to replace a transparent Ethernet card comprising a static assignment of ports to TDM channels with a card that supports Ethernet layer 2 (L2) switching. Hence, instead of having a static CC on the Ethernet layer, a Matrix Flow Domain Fragment (MFDFr) needs to be created in the L2-switch that replaces the transparent card.

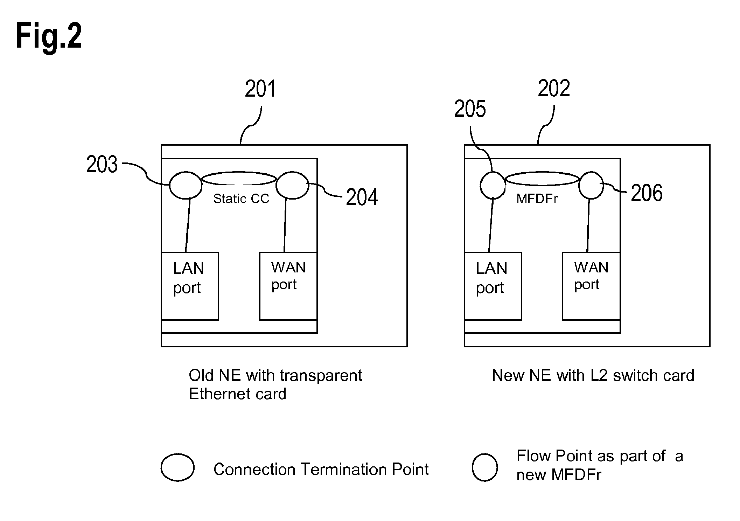

   **Fig.2** shows an example for exchanging an old NE 201 comprising a transparent Ethernet card that provides a static mapping of ports to TDM channels by a new NE 202 comprising a card supporting Ethernet L2 switching. The transparent Ethernet card of the old NE 201 comprises connection termination points 202 and 203, whereas the L2 switch card of the new NE 202 has flow points 204 and 205 as part of a new MFDFr.
f. A further problem may relate to customer ports of the NE that have to be processed by new ports of the new NE regarding services terminating with this NE.

Existing solutions require the user or operator to manually identify all services that make use of a particular NE to be upgraded. The user manually needs to process all services using the upgraded NE, in particular to manually define configurations within the new NE for each service by mapping old objects to new objects and by translating an old configuration to a new configuration. The main steps of such manual processing can be summarized as follows:
(1) Physically install the new NE.
(2) Deactivate all services traversing the previous NE(s) to release the CCs in the NE(s). It is noted that for TMN security reasons the old NE cannot be deleted as long as any object is used by the NE for any service.
(3) Delete the physical trails (PTs) regarding the old NE in the TMN system.
(4) Remove the connections to/from the old NE(s) and physically connect the new NE.
(5) Delete the old NE(s) in the TMN system.
(6) Create the new NE in the TMN system.
(7) Create the physical connections to the new NE in the TMN system.
(8) Repair all services that traverse the replaced NE via the TMN system. Hence, reroute all services and define manually the entry and exit points for the new NE.

As can be seen from the required process above, this is a time consuming process which leads to high OPEX and long downtimes of the services traversing the NE affected.

If such long downtime is not acceptable for a service (which is normally the case), the operator has to invest even more OPEX for such an upgrade procedure, i.e. the upgrade requires more effort as all services need to be rerouted before and after the NE was upgraded. Thus, further resources of the network are required for such an upgrade leading to a further increase of CAPEX.

The **problem** to be solved is to overcome the disadvantages set forth above and in particular to provide an efficient approach to allow for upgrading network elements with a reduced impact on CAPEX and OPEX.

This problem is solved according to the features of the independent claims. Further embodiments result from the depending claims.

In order to overcome this problem, a method for modifying a path and/or a service of at least one first network element in a TMN system is provided comprising the steps:
- identify the path through and/or the service of the first network element;
- map the path and/or the service identified to at least one second network element.

This allows for an efficient update of the at least one first network element by said at least one second network element resulting in a reduced downtime of the network element(s) affected. The approach provided further enables a largely automated augmentation of the system.

It is noted that the approach may in particular refer to objects utilized at the TMN system. It is further noted that said modifying may comprise and/or be associated with a replacement, an upgrade, a deletion and/or an installation of an object, in particular a network element and/or at least one service associated with such network element and/or at least one path associated with such network element.

Such modification may further result in processing an object in the TMN-System, i.e. modifying, deleting, installing, creating, etc. such object.

In an embodiment, the method further comprises the step of:
- recreating the at least one second network element in the TMN system.

As an option, the method comprises the further step:
- delete the at least one first network element in the TMN system.

In another embodiment, said path comprises at least one connection that is in particular represented by at least one physical connection.

In a further embodiment, said path comprises at least one connection oriented resource, e.g., time slot.

It is noted that any sort of multiplex-technique may be applicable. Hence, paths may be associated and/or assigned to one or more slots in a time and/or frequency and/or any other code space.

In a next embodiment, identifying the path and/or service comprises at least one of the following:
- identify a transversal or a traversing path through the at least one first network element;
- identify a path terminating at the at least one first network element.

The terminating path(s) may be handled differently. In particular pre-defined data made available by a preparation file can be used to set up the corresponding object in the TMN system.

It is also an embodiment that the path is identified by at least one ingress port and/or by at least one egress port of the network element.

Pursuant to another embodiment, the at least one second network element replaces the at least one first network element.

According to an embodiment, mapping the path and/or the service considers predefined data, in particular a client-port-mapping and/or new features of the at least one second network element.

According to another embodiment the approach is utilized for an automatic replacement of the at least one first network element (by the at least one second network element).

In yet another embodiment, information regarding the at least one network element is at least partially maintained for fault-management purposes.

Hence, the at least one first network element may be physically and/or logically (the latter in the TMN system) maintained in order to have a fallback-solution available in case an upgrade or replacement process fails. It is further possible to only maintain the physical representation of the at least one first network element and - in case of failure - re-initialize the objects of the at least one first network element in the TMN system (after having re-attached the physical connections to said at least one first network element).

The problem stated above is also solved by a device comprising a processor unit that is equipped and/or arranged such that the method as described herein is executable on said processor unit.

According to an embodiment, the device is a communication device, in particular a device comprising and/or associated with and/or capable of running (at least a portion of) a TMN system.

The problem stated supra is further solved by a communication system comprising the device as described herein.

Embodiments of the invention are shown and illustrated in the following figures:
- Fig.3: shows an example for replacing a group of network elements with a single new network element;
- Fig.4: shows a sequence of tasks for replacing an old network element with a new network element thereby comparing a previous procedure with the optimized procedure according to the solution provided herein;
- Fig.5: depicts a replacement of an old network element with a new network element for a traversing path and a terminating path through the new network element;
- Fig.6: shows a replacement of an old network comprising several network elements by a new network comprising several network elements;
- Fig.7: shows old network elements to be replaced by a new network element, wherein a client path remains unchanged and only the server paths through the new network element are replaced.

The approach provided allows for automatically replacing at least one old NE (or several old NEs) by a new NE (or more new NEs), analyzing paths of the affected services, identifying a gap in the route and setting up missing configurations that are required to fulfill parameters of services affected.

Hence, configurations of the old NE are not just reconfigured or simply mapped, but the service is automatically recreated in the new NE according the service's parameter.

The TMN system may preferably keep a required configuration and an actual configuration of the network. This may serve as a basis for setting up the required configurations throughout the network and for assigning old resources to new resources, wherein the new resources may be of different type(s).

In the TMN system a new network element can be created in relation to the network element which has to be replaced. During or associated with this step, ports may be assigned to customers. Such information may be used in a later step to configure the required settings in the NE regarding services that terminate in the NE to be upgraded.

The TMN system may support an operation to exchange the previous managed NE by the new NE. During this operation the TMN system in particular automatically performs the following analysis and configuration:
i. The TMN system analyzes which service uses a resource of the NE to upgrade and stores the result.
ii. The object instance which represents the old NE-type, i.e. the NE which is to be replaced, is replaced in the TMN system by an object that represents the new NE-type.
iii. A new, actual topology, is identified, i.e. connections of the new NE to adjacent (directly connected) NEs.
   An available functionality for identifying the connections between the ports of the NEs which are connected to any port of the new NE, e.g., a section trace identifier for SDH or xWDM ports or a link discovery protocol for a packet based technology, is used. The results are evaluated and connected ports are automatically identified thereby detecting the new network topology.
iv. The TMN system preferably checks whether the old NE can be replaced by the new type of NE, i.e. whether the functionality required may be provided by the new type of NE.
   It can be set, for example, whether the new NE supports a LO switching matrix or required policing values and filters for an Ethernet connection.
   If the functionality required cannot be provided by the new NE, the user may obtain a list of incompatibilities that then need to be resolved in a different way via the network, e.g., by bypassing this NE for particular services.
   In order to accelerate the time required for switching to the new NE, the user may be inquired beforehand about defining additional parameters that are required for the reestablishment of the service with a new NE or functionality/technology or for an automated setup of the network topology in the TMN system in case the network supports any means concerning this matter.
v. For each service identified in step ii. the following steps may be processed:
   Based on the new actual network topology, the TMN system analyzes a connectivity from both ends along a route (in the unchanged part of the network) until reaching the gap, i.e. the new NE with the resources not yet configured thereby identifying information regarding ports, channels, etc. that need to be connected in order to enable the transmission of the service's traffic via said new NE.
      a) If the service end-point is located at the NE to be upgraded, customer information is used (as set forth above) to identify the required connectivity.
      b) The TMN system analyses the service's parameter(s) (e.g. bandwidth) and maps the service's parameter(s) to the resources and to the functionality supported by the new NE.
         To close the gap in the new NE, the TMN system uses an auto-router to find a connectivity within the new NE (e.g., for a virtual container (VC) CC-matrix, for an assignment of generic framing procedure (GFP) groups or for an Ethernet L2 switch). In this step, differences between the new NE and the old NE(s) like the amount of CC-matrices for SDH, e.g., if there is only one CC-matrix which supports HO and LO or if there are separate CC-matrixes for HO and LO CCs, or the policing functionality for Ethernet technology, are resolved.
         It is noted that the new NE may comprise at least one NE to replace one or several old NE(s).
         In case the functionality of the new NE requires additional parameters, e.g., a virtual LAN (VLAN) identifier (ID), which cannot be resolved by the mere analysis of the service's parameters, this information may be provided as set forth in step iv. or upon user-input.
      c) The TMN system may configure the required settings in the new NE. After this step, the services traversing the new NE are operational (again).

After a successful configuration which ensures that all services traversing this new NE are again up and running, the actual configurations are set as required configurations.

The old network element can be detached from the network before step iii. is performed. Hence, the overall replacement may be as follows:
(1) Physically install the new NE.
(2) Create the new NE in the TMN system.
(3) Physically remove the connections from/to the old NE and connect the new NE.
(4) Perform the operation "Exchange NEs" in the TMN system.
(5) Delete the old NE in the TMN system.

The downtime of the services traversing the NE to be upgraded is reduced to the duration of steps (3) and (4). Hence, advantageously, all time consuming processes are performed by the TMN system automatically.

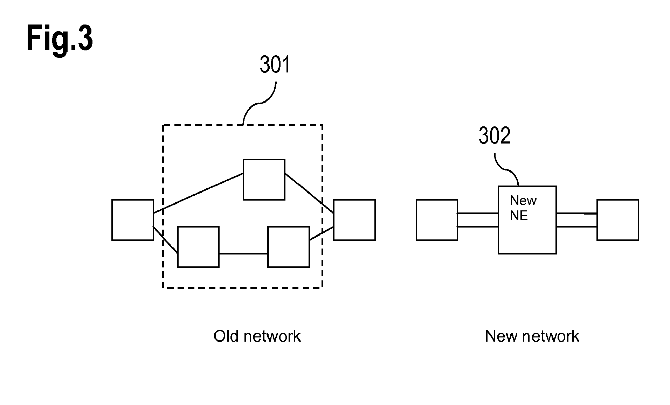

As depicted in **Fig.3****,** the concept described is also applicable for replacing a group of old NEs 301 by a single new NE 302. Accordingly, the "old NE" as mentioned herein may refer to several old NEs or a group of old NEs as well. The TMN system may consider all services that traverse the group of old NEs. Furthermore, it may have to be checked whether the new NE covers all functionality available in the whole group of old NEs to be replaced.

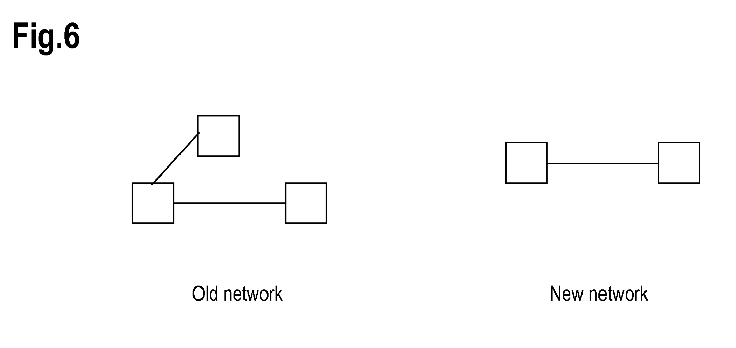

As shown in **Fig.6****,** the concept described allows exchanging a complete old network by a complete new network.

An alternative concept would be to implement automatic network augmentation features for rerouting of affected services before and after the NE was replaced. However this solution may require additional resources in the network (CAPEX) as well as it may require additional input from the user and/or operator.

The optimized augmentation concept provided allows the replacement by new NE-types in a short time period with minimum effort and minor operator know-how. Hence, this approach efficiently overcomes the disadvantages of
- a complex mapping of the old equipment and functionality to the new one;
- an enduring downtime of services affected when the NE is augmented manually; and
- a need for a plurality of additional network resources.

By the support of this optimized NE replacement concept in the TMN system, the provider and/or operator may achieve a tremendous reduction in OPEX. The replacement of the NE can be performed without taking the old NE out of operation before the process of replacement is started. Instead, it may be switched over to the new NE-type with reduced or no downtime at all. Hence, time consuming tasks like rerouting affected services becomes substantially obsolete. It may even be possible to replace the NE at a time when a limited (short) downtime is acceptable, e.g., during night hours.

This saves further CAPEX as no additional resources are required for rerouting of the services.

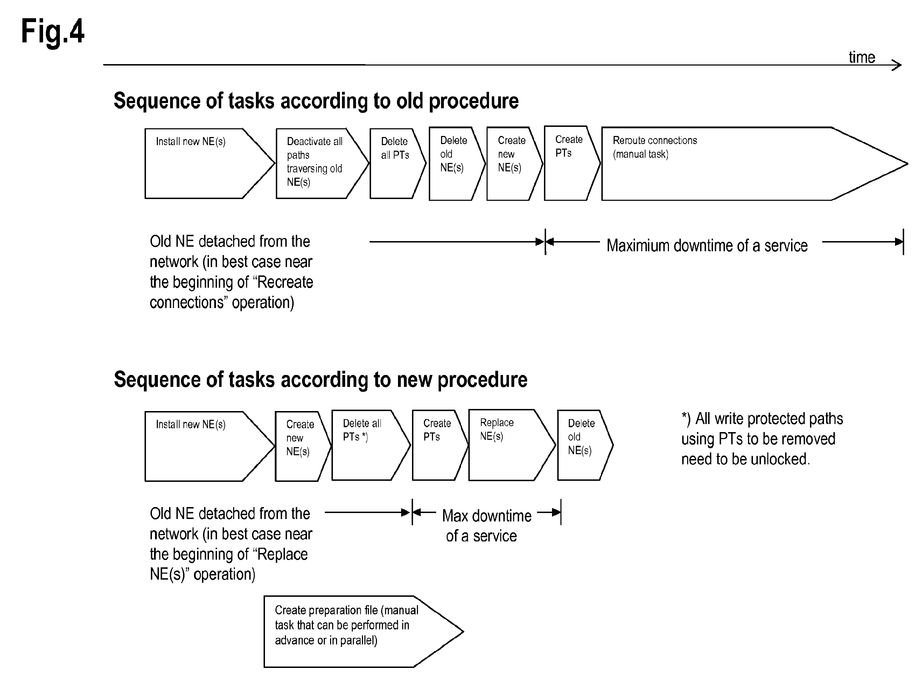

**Fig.4** shows a sequence of tasks according to the previous procedure of NE replacement and the reduced amount of time required due to the sequence of tasks suggested by the approach described herein.

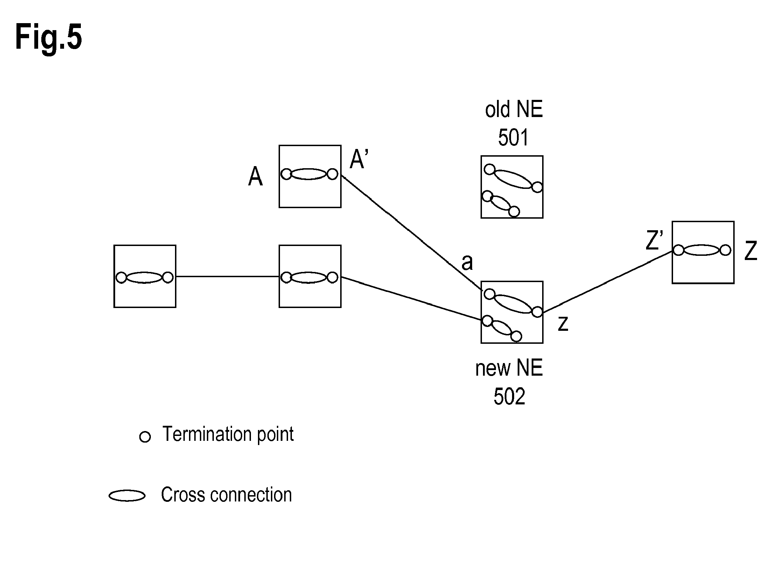

**Fig.5** depicts a replacement of a NE (old NE 501 by a new NE 502). The replacement comprises in particular the following steps:
(1) Identify all paths traversing the old NE 501 or all paths terminating at the old NE 501.
(2) Check for each path whether it uses server paths that traverse old NE(s).
   In such case replacement action may not be necessary, since server paths can be embedded into a client path by reference. Said client path therefore can remain unchanged.

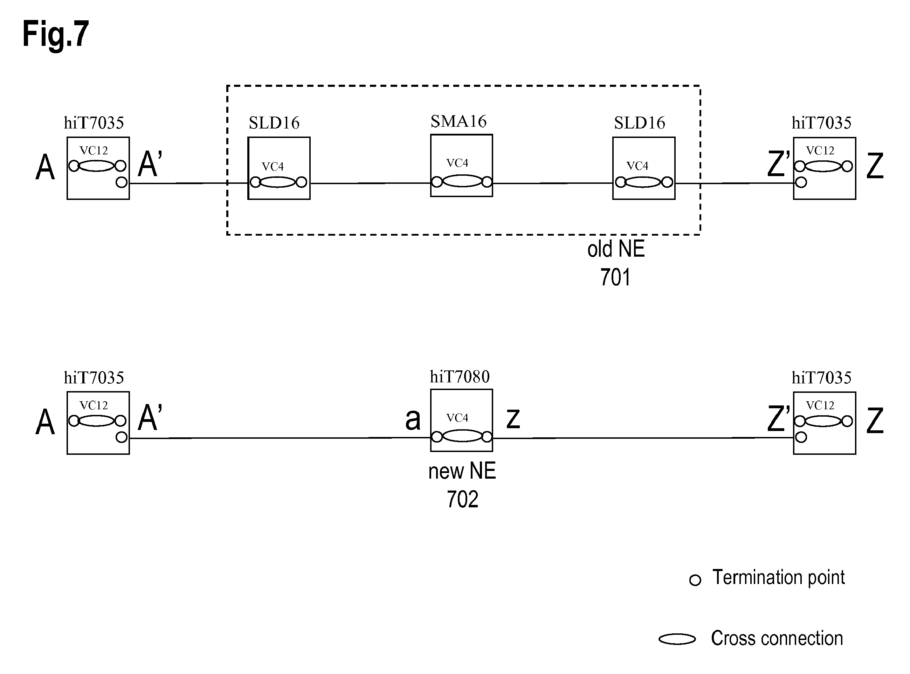

   **Fig.7** shows old NEs 701 to be replaced by a new NE 702. A client path A to Z remains unchanged by the new NE 702, only the server paths through the new NE 702 needs to be replaced.
(3) Perform for each traversing path:
   a) Calculate route between a-port and z-port and/or a-timeslot and z-timeslot at the new NE 502; the port and/or timeslot are known from new port connection and from the used time slot in at least one adjacent NE.
   b) Activate path.
(4) Perform for each terminating path:
   a) Take new client port from a preparation file; said preparation file may be set up in advance.
   b) Calculate route between line port and/or timeslot and new client port.
   c) Activate path.

As a fallback solution (e.g., experiencing problems with the operation and/or activation of the new NE), the new NE may be detached and the old NE (not yet removed) may be attached again. Actual routes for all concerned paths may easily be adopted by the TMN system, in particular via a multi-select mechanism.

This concept can be used for different types of NEs and for different technologies. As stated above, a transition from a transparent Ethernet card to a L2 switch card is one example for different technologies to be applied. This can be extended to any other connection-oriented technology like MPLS or PBB-TE. The operators may adjust the parameters to be configured depending on the technology (e.g. MPLS-labels for MPLS, or MAC-addresses for PBB-TE).

### Abbreviations

- CAPEX: CAPital EXpenditure
- CC: Cross Connection
- CTP: Connection Termination Point
- E2E: End-to-End
- GFP: Generic Framing Procedure
- HO: Higher Order (VC4)
- IF: InterFace
- LAN: Local Area Network
- LO: Lower Order (i.e. VC12, VC2, VC3)
- MAC: Media Access Control
- MFDFr: Matrix Flow Domain Fragment
- MPLS: Multi Protocol Label Switching
- NE interface card: e.g., for a connection to a customer equipment
- NE line card: e.g., for a connection to other NEs
- NE: Network Element
- Network Resource: e.g., any equipment physically installed in the network, e.g., NE or card
- OPEX: OPerational EXpenditure
- Path: e.g., a set of NEs, links and/or ports, where all possible routes (active and protected) may traverse
- PBB-TE: Provider Backbone Bridging - Traffic Engineering
- PT: Physical trail, connection between adjacent NEs
- QoS: Quality of Service
- Route: at least two NEs via which traffic is conveyed
- SDH: Synchronous Digital Hierarchy
- Service: e.g., an entity that establishes a relationship between a customer and the network resources used; the service may comprise a reference to a customer, a NE and to links as well as a QoS; each service may comprise at least one (dedicated) paths assigned thereto
- SF: Switching Fabric, can be a LO- or a HO- switching fabric
- STM: Synchronous Transfer Module
- TMN: Telecommunications Management Network
- TMN system: allows the operator, e.g., to configure end-to-end services, affecting several network elements at a time
- TP: Termination Point
- TTP: Trail Termination Point
- VC: Virtual Container, i.e. VC4, VC3, VC2 and VC12
- WAN: Wide Area Network
- WDM: Wavelength Division Multiplexing
- xWDM: C- or D-WDM system

## Claims

1. A method for modifying a path and/or a service of at least one first network element in a TMN system comprising the steps:
- identify the path through and/or the service of the first network element;
- map the path and/or the service identified to at least one second network element.

2. The method according to claim 1 comprising the step of:
- recreating the at least one second network element in the TMN system.

3. The method according to claim 2 comprising the step:
- delete the at least one first network element in the TMN system.

4. The method according to any of the preceding claims, wherein said path comprises at least one connection that is in particular represented by at least one physical connection.

5. The method according to any of the preceding claims, wherein said path comprises at least one connection oriented resource, in particular a time slot.

6. The method according to any of the preceding claims, wherein identifying the path and/or service comprises at least one of the following:
- identify a transversal or a traversing path through the at least one first network element;
- identify a path terminating at the at least one first network element.

7. The method according to any of the preceding claims, wherein the path is identified by at least one ingress port and/or by at least one egress port of the network element.

8. The method according to any of the preceding claims, wherein the at least one second network element replaces the at least one first network element.

9. The method according to any of the preceding claims, wherein mapping the path and/or the service considers predefined data, in particular a client-port-mapping and/or new features of the at least one second network element.

10. The method according to any of the preceding claims utilized for an automatic replacement of the at least one first network element.

11. The method according to any of the preceding claims, wherein information regarding the at least one network element is at least partially maintained for fault-management purposes.

12. A device comprising a processor unit that is equipped /arranged such that the method according of any of the preceding claims is executable on said processor unit.

13. The device according to claim 12, wherein said device is a communication device, in particular a device comprising and/or associated with and/or capable of running a TMN system.

14. Communication system comprising the device according to any of claims 12 or 13.
